# EUROPÄISCHE PATENTANMELDUNG

(11) **EP 4 092 640 A1**
(43) Veröffentlichungstag der Anmeldung: **23.11.2022**
(21) Anmeldenummer: 22174009.5
(22) Anmeldetag: 18.05.2022
(51) Int. Cl.: G07F 7/06, B62B 3/14

(54) **ENTRIEGELUNGS-UND HALTEVORRICHTUNG**

(30) Priorität: 21.05.2021 DE 102021113298
(71) Anmelder: Kaufmann, Werner, 8880 Walenstadt (CH)
(72) Erfinder: Kaufmann, Werner, 8880 Walenstadt (CH)
(74) Vertreter: Manitz Finsterwald Patent- und Rechtsanwaltspartnerschaft mbB

(57) **Zusammenfassung**

Die Erfindung betrifft eine Entriegelungs- und Haltevorrichtung zum Entriegeln von Einkaufswägen (E) und Halten von Gegenständen (G), wobei die Entriegelungsund Haltevorrichtung (26) einen Schieber (24) aufweist, um ein Pfandschloss (10) zu entriegeln, und wobei die Entriegelungs- und Haltevorrichtung (26) ferner derart ausgebildet ist, dass diese einen Gegenstand (G) zumindest zweitweise an einem Haltelement (30) der Entriegelungs- und Haltevorrichtung (26) befestigen und/oder halten kann.

## Beschreibung

Die Erfindung betrifft eine Entriegelungs- und Haltevorrichtung zum Entriegeln von Einkaufswägen und Halten von Gegenständen.

Es ist bekannt, Einkaufswägen mit Pfandschlössern zu versehen, um einem unbefugten Entwenden der Einkaufswägen vorzubeugen. Außerdem soll durch die Pfandschlösser den Kunden, welche die Einkaufswägen benutzen, ein Anreiz gesetzt werden, um die Wägen nach Benutzung wieder an entsprechenden Sammelstellen abzustellen.

Ein vergleichsweise umständlicher Fakt ist bei diesen Systemen, dass der Benutzer stets eine passende Münze oder einen passenden Chip zur Hand haben muss, um das Pfandschloss eines Einkaufswagens entriegeln und den Einkaufswagen benutzen zu können.

Ein weiterer Nachteil, der sich bei der Benutzung von Einkaufswägen gezeigt hat, ist, dass ein Benutzer, wenn er einen Einkaufszettel bzw. eine Einkaufsliste nutzen möchte, mit einer Hand die Liste halten muss, während er den Einkaufswagen mit der anderen Hand schieben muss. Es bleibt also keine freie Hand, um gleichzeitig auch noch die Einkäufe in den Einkaufswagen zu legen.

Es ist daher die Aufgabe der Erfindung eine Vorrichtung bereitzustellen, welche sowohl das Problem der Entriegelung des Pfandschlosses als auch des Haltens der Einkaufsliste lösen kann.

Diese Aufgabe wird durch die Erfindung mit den Merkmalen von Anspruch 1 gelöst.

Insbesondere stellt die Erfindung eine Entriegelungs- und Haltevorrichtung zum Entriegeln von Einkaufswägen und Halten von Gegenständen bereit, wobei die Entriegelungs- und Haltevorrichtung einen Schieber aufweist, um ein Pfandschloss zu entriegeln, und wobei die Entriegelungs- und Haltevorrichtung ferner derart ausgebildet ist, dass diese einen Gegenstand zumindest zweitweise an einem Haltelement der Entriegelungs- und Haltevorrichtung befestigen und/oder halten kann.

Somit bietet die Erfindung eine Vorrichtung, welche sowohl in der Lage ist, ein bekanntes Pfandschloss zu entriegeln, als auch weitere Gegenstände zumindest zeitweise zu befestigen und/oder zu halten. Demnach ist es beispielsweise vorstellbar, dass an dem Halteelement ein Einkaufszettel und/oder ein Smartphone oder Tablet, in dem gegebenenfalls die Einkaufsliste gespeichert sein kann, oder ähnliche Gegenstände befestigt werden können, sodass ein Benutzer während des Einkaufs zumindest eine Hand frei hat, um die ausgewählten Einkäufe in den Einkaufswagen zu legen.

Pfandschlosssysteme weisen ein an einem Einkaufswagen befestigbares Gehäuse auf, in dem eine Kopplungseinrichtung mit integrierter Pfandrückhalteeinrichtung angeordnet ist. Am Gehäuse ist außerdem ein flexibles Teil befestigt, das einen mit einem metallischen Schaft ausgestatteten Schlüssel trägt. Der Schlüssel besitzt zur besseren Handhabung gewöhnlich zudem einen aus Kunststoff bestehenden Halteknauf.

Dieser Schlüssel kann auf einer dem Benutzer abgewandten Seite des Gehäuses eines weiteren Pfandschlosses in einen dafür vorgesehenen Schlitz eingeführt werden, um so zwei Pfandschlösser, und dementsprechend auch zwei Einkaufswägen, miteinander zu koppeln.

Zum Lösen dieser Kopplung weist das Pfandschloss auf der dem Benutzer zugewandten Seite einen Schlitz auf, in den ein Schieber, vorzugsweise in der Form einer Münze, eingeschoben werden kann, sodass der Schlüssel vom Pfandschloss ausgeworfen wird.

Hierfür kann das Haltelement verschiedene Befestigungen aufweisen, die allesamt in der Lage sind, einen Gegenstand zu halten. Beispielsweise könnte das Halteelement einen Clip oder eine Klemme aufweisen, mit denen der Gegenstand an zumindest einer Seite eingeklemmt werden kann.

Alternativ oder zusätzlich wäre es auch möglich, dass das Halteelement elastische Schlaufen oder Bänder aufweist, mit denen der Gegenstand an dem Halteelement befestigt wird.

Unabhängig von der Befestigungsart des Gegenstandes an dem Halteelement ist bei den oben genannten Ausführungsformen zumindest während der Benutzung der Entriegelungs- und Haltevorrichtung das Halteelement derart zum Schieber angeordnet, dass der daran befestigte Gegenstand von dem Benutzer leicht betrachtet werden kann, während er den Einkaufswagen schiebt.

Es ist des Weiteren aber auch denkbar, dass das Halteelement derart ausgestaltet ist, dass anstelle oder zusätzlich zu einer Einkaufsliste und/oder einem Smartphone auch eine Flasche, ein Becher oder eine Flasche gehalten werden kann, sodass ein Getränk des Benutzers am Einkaufswagen gehalten wird. Ein derartiges Halteelement kann beispielsweise die Form eines Rings aufweisen, in den der Becher bzw. die Flasche hineingeschoben wird. Zusätzlich kann so ein Halteelement aber auch eine Befestigung aufweisen, welche es ermöglicht einen weiteren Gegenstand, wie etwa den Einkaufszettel, an der Entriegelungs- und Haltevorrichtung zu befestigen.

In diesem Fall können der Schieber und das Halteelement bzw. jener Teil des Halteelements, der den Becher bzw. die Flasche hält, in einem anderen Winkel als in den oben genannten Ausführungsformen zueinander angeordnet sein, sodass der Becher bzw. die Flasche horizontal in dem Halteelement ausgerichtet ist, um ein Austreten von Flüssigkeit aus dem Behälter zu vermeiden.

Der Schieber kann bei allen Ausführungsformen als Universalschlüssel oder Universalchip ausgebildet sein, der mit allen bekannten Pfandschlössern kompatibel ist. Da bekannte Pfandschlösser üblicherweise mit Münzen entriegelt werden können, kann auch der Schieber bzw. zumindest jener Teil des Schiebers, der in das Pfandschloss eingeführt wird, im Wesentlichen die Form einer Münze bzw. eines Chips aufweisen, um das Pfandschloss zu entriegeln. Sollte das zu entriegelnde Pfandschloss eine andere Form des Schiebers erfordern, kann der Schieber in der entsprechend anderen Form ausgebildet sein.

In einer Ausführungsform der Erfindung ist das Halteelement einteilig mit der Entriegelungs- und Haltevorrichtung ausgebildet. Insbesondere kann das Halteelement einteilig mit dem Schieber ausgebildet sein. Eine einteilige Ausbildung ermöglicht sowohl eine kostengünstige als auch eine einfache Herstellung, da nur eine Komponente hergestellt werden muss. Zudem kann sich eine einteilige Ausgestaltung der Entriegelungs- und Haltevorrichtung positiv auf die Robustheit der Vorrichtung auswirken, da keine Gelenke oder andere Verbindungspunkte vorhanden sind, welche sich abnutzen oder potentielle Bruchstellen darstellen können.

In einer alternativen Ausführungsform ist das Haltelement mehrteilig mit der Entriegelungs- und Haltevorrichtung ausgebildet. Eine mehrteilige Ausgestaltung kann den Vorteil haben, dass die verschiedenen Komponenten der Entriegelungs- und Haltevorrichtung ressourcenschonender fabriziert werden können, wenn die einzelnen Komponenten beispielsweise aus Kunststoffplatten geschnitten oder gefräst werden.

Es ist auch denkbar, dass das Halteelement, insbesondere lösbar, an der Entriegelungs- und Haltevorrichtung fixiert ist. Hierbei kann insbesondere das Halteelement über eine Verbindung mit dem Schieber verbunden sein, sodass beispielsweise verschiedene Halteelemente mit einem Universalschieber verbunden werden können. Dies hat den Vorteil, dass verschiedene Halteelemente je nach Bedarf gewählt werden können und/oder dass der Schieber auch unabhängig vom Halteelement benutzt werden kann, wenn kein Haltelement benötigt wird.

Durch eine lösbare Verbindung des Schiebers an dem Halteelement ist es auch denkbar, dass das Halteelement unter verschiedenen Winkeln am Schieber befestigt werden kann, sodass ein darauf befestigter Gegenstand, beispielsweise ein Smartphone oder ein Zettel oder Notizblock, entweder vom Benutzer des Einkaufswagens oder von einem im Kindersitz des Einkaufwagens sitzenden Kind betrachtet werden kann.

Ein weiterer Vorteil kann es auch sein, dass Halteelement und Schieber der Entriegelungs- und Haltevorrichtung unabhängig voneinander und damit platzsparend verstaut werden können, wenn sie nicht benötigt werden.

Gemäß einer Ausführungsform kann der Schieber auch gegenüber dem Haltelement der Entriegelungs- und Haltevorrichtung schwenkbar angeordnet sein. Somit kann die Entriegelungs- und Haltevorrichtung beispielsweise besser verstaut werden, da der Schieber eingeschwenkt werden kann, um Platz zu sparen und/oder um Beschädigungen bei der Aufbewahrung vorzubeugen.

Alternativ wäre es auch denkbar, dass der Schieber derart gegenüber dem Halteelement verstellbar ist, dass das Halteelement während der Benutzung immer in Blickrichtung geschwenkt werden kann, unabhängig davon, an welcher Seite des Einkaufswagens sich der Benutzer gerade befindet. Dies kann den Vorteil haben, dass der Benutzer den Einkaufswagen an einer Stelle im Supermarkt abstellen kann, um mehrere Produkte in der unmittelbaren Umgebung zu holen. Das Halteelement kann dann in Richtung des Benutzers geschwenkt werden, sodass eine an dem Halteelement befestigte Einkaufsliste unabhängig von der Position des Benutzers zum Einkaufswagen betrachtet werden kann.

In einer weiteren Ausführungsform ist der Schieber gegenüber dem Haltelement der Entriegelungs- und Haltevorrichtung verschiebbar angeordnet, sodass der Schieber ausgehend vom Halteelement ausklappbar bzw. ausfahrbar ist, um eine kompakte Bauweise zu ermöglichen. Beispiele für eine derartige Ausführungsform können beispielsweise Handyhüllen oder Notizblöcke mit integriertem ausklappbarem und/oder ausfahrbaren Schieber sein.

Gemäß einer weiteren Ausführungsform weist das Halteelement eine Auflagefläche auf, auf der der Gegenstand aufliegt, wenn er befestigt und/oder gehalten wird. Die Auflagefläche kann beispielsweise als plane Fläche ausgestaltet sein, die groß genug ist, um einen Gegenstand, wie beispielsweise einen Notizblock, einen Zettel und/oder ein Smartphone oder Tablet darauf abzulegen bzw. daran anzulegen, sodass der Gegenstand auf der Auflagefläche aufliegt.

Es kann des Weiteren auch möglich sein, dass das Halteelement zumindest eine Stabilisierungsvorrichtung aufweist, die zwischen dem Halteelement und dem Schieber angeordnet ist, um das Halteelement zu stabilisieren. Dies hat den Vorteil, dass das Halteelement bei Benutzung der Entriegelungs- und Haltevorrichtung weniger bis gar nicht wackelt.

Die Stabilisierungsvorrichtung kann beispielsweise als eine oder mehrere elastische Stabilisierungselemente, beispielsweise Federn, insbesondere Blattfedern, ausgebildet sein, die derart zwischen Halteelement und Schieber angeordnet sind, dass das Halteelement bei Benutzung der Entriegelungs- und Haltevorrichtung am Einkaufswagen festgeklemmt wird.

In alternativen Ausführungsformen wäre es beispielsweise auch denkbar, dass die Stabilisierungsvorrichtung als weitere Klemmvorrichtung ausgebildet ist, mit der das Halteelement bei Benutzung am Einkaufswagen festgeklemmt werden kann.

Eine noch weitere Ausführungsform sieht es auch vor, dass das Halteelement zumindest eine Klemmvorrichtung aufweist, um den Gegenstand, insbesondere an der Auflagefläche, zu fixieren. Die Klemmvorrichtung kann insbesondere auch derart ausgebildet sein, dass sie den Gegenstand lösbar an dem Halteelement fixiert, sodass dieser bei Bedarf ausgetauscht werden kann. Alternativ wäre es grundsätzlich auch denkbar, dass die Klemmvorrichtung den Gegenstand permanent fixiert.

Die Klemmvorrichtung kann sowohl nur an einer Seite des Halteelements vorgesehen sein als auch an zwei oder mehreren Seiten. Die exakte Ausgestaltung der Klemmvorrichtung kann hierbei von der Anwendung abhängen. Es ist beispielsweise denkbar, dass eine Klemmvorrichtung, welche lediglich einen Zettel an dem Halteelement fixieren soll, anders ausgebildet ist, als eine Klemmvorrichtung, welche ein Smartphone oder ein Tablet halten soll. Grundsätzlich ist es jedoch auch möglich, dass für beide Zwecke dieselbe Klemmvorrichtung vorgesehen ist, sodass ein Halteelement universell einsetzbar ist.

Es ist des Weiteren auch denkbar, dass das Halteelement zumindest eine weitere Befestigungseinrichtung aufweist, die den Gegenstand zusätzlich fixieren kann und/oder die einen weiteren Gegenstand an dem Halteelement befestigen kann. Wie oben bereits angedeutet, erfordern insbesondere größere Gegenstände unter Umständen spezielle Maßnahmen, um diese sicher an der Entriegelungs- und Haltevorrichtung zu fixieren. Für solche Fälle kann zumindest eine zusätzliche Befestigungseinrichtung vorgesehen sein, welche entweder gleich wie die Klemmeinrichtung ausgebildet sein kann, oder welche eine alternative Ausführungsform aufweist.

Für letztere Ausführungsform kann die Befestigungseinrichtung beispielsweise elastische Schlaufen, eine elastische Umrandung an dem Halteelement oder ähnliches aufweisen, um einen größeren bzw. schwereren Gegenstand zusätzlich an dem Halteelement zu fixieren.

In manchen Ausführungsformen ist auch möglich, dass mehrere Gegenstände gleichzeitig an der Entriegelungs- und Haltevorrichtung befestigt werden können. Hier wäre es beispielsweise denkbar, dass sowohl eine handgeschriebene Einkaufsliste als auch ein Smartphone gleichzeitig an dem Halteelement befestigt werden.

Gemäß einer weiteren Ausführungsform weist das Halteelement zumindest eine Begrenzungskante auf, die an einer der Klemmvorrichtung und/oder der weiteren Befestigungseinrichtung gegenüberliegenden Seite des Halteelements angeordnet ist, sodass der Gegenstand an der Begrenzungskante anliegen kann, insbesondere wenn er von der Klemmvorrichtung und/oder der weiteren Befestigungseinrichtung gehalten wird. Die Begrenzungskante kann dementsprechend ein komplementäres Teil zur Klemmvorrichtung und/oder der Befestigungseinrichtung sein, an der der Gegenstand anliegen kann, um von der Klemmvorrichtung bzw. der Befestigungseinrichtung sicher fixiert zu werden.

Es ist außerdem auch möglich, dass eine weitere Begrenzungskante vorgesehen ist, welche im Bereich der Klemmvorrichtung vorgesehen ist, sodass die Auflagefläche für den Gegenstand auch im Bereich der Klemmvorrichtung begrenzt ist.

In diesem Zusammenhang ist es auch denkbar, dass die Begrenzungskante in der Befestigungseinrichtung integriert ist. Ein Beispiel hierfür könnte eine elastische Umrandung des Halteelements sein, mit der der Gegenstand an seinem gesamten Umfang an dem Halteelement befestigt wird, wie es beispielsweise von herkömmlichen Handyschutzhüllen bekannt ist.

Eine weitere Ausführungsform sieht es außerdem vor, dass zumindest eine weitere Fixiervorrichtung vorgesehen ist, die dazu ausgebildet ist, einen weiteren Gegenstand, insbesondere einen Stift, zu fixieren und/oder zu halten. Speziell wenn ein Notizblock, ein Zettel oder ähnliches als Gegenstand an dem Halteelement befestigt werden soll, kann es von Vorteil sein, wenn zusätzlich eine Fixiervorrichtung für einen weiteren Gegenstand, insbesondere einen Stift, zur Verfügung steht, damit ein Benutzer beim Abarbeiten der Einkaufsliste die bereits erledigten Posten ausstreichen bzw. markieren kann. Durch die Bereitstellung einer zusätzlich Fixiervorrichtung für einen derartigen Gegenstand kann sichergestellt werden, dass der Benutzer besagten Gegenstand, also den Stift, auch immer bei sich führt und die Gefahr des Vergessens minimiert wird.

Eine derartige Fixiereinrichtung kann beispielsweise als Klemmeinrichtung, als Ring, Schlaufe oder auch als Röhre ausgebildet sein, die den Gegenstand, d. h. den Stift halten kann. Die Fixiereinrichtung kann grundsätzlich an jeder Seite des Halteelements angeordnet sein.

Alternativ wäre es auch denkbar, dass die Fixiereinrichtung den weiteren Gegenstand permanent an dem Halteelement fixiert, indem er beispielsweise über eine Schnur fest mit ihm verbunden ist.

Eine noch weitere Ausführungsform sieht es außerdem vor, dass der Schieber an einem unteren Ende des Halteelements angeordnet ist, und/oder dass der Schieber und das Halteelement in einem Winkel zueinander angeordnet sind, der zwischen 0° und 90° liegt, wobei der Winkel vom Benutzer gegebenenfalls einstellbar ist.

Durch ein Vorsehen des Schiebers an einem unteren Ende des Halteelements können diese beiden Komponenten derart zueinander angeordnet sein, dass das Halteelement bei Benutzung der Entriegelungs- und Haltevorrichtung nach oben in Richtung des Benutzers absteht, sodass der Benutzer das Halteelement bzw. den daran befestigten Gegenstand während der Benutzung, d. h. beim Schieben des Einkaufswagens, gut und leicht erkennen kann. Hierfür kann es hilfreich sein, wenn das Halteelement in einem Winkel, der kleiner als 90° ist, zum Schieber angeordnet ist.

Es des Weiteren auch denkbar, dass der Schieber an seinem freien Ende teilweise im Wesentlichen die Form einer Münze aufweist, die über einen Verbindungsabschnitt mit dem Halteelement verbunden oder verbindbar ist. Die Form einer Münze hat den Vorteil, dass der Schieber als Universalschlüssel für die meisten bekannten Pfandschlösser funktioniert, da diese beispielsweise mittels 50 Ct, 1€ oder 2€ - Münzen entriegelt werden können.

Grundsätzlich ist es aber auch möglich, dass der Schieber an seinem freien Ende eine andere Form aufweist, wenn die zu entriegelnden Pfandschlösser eine andere Form zum Entriegeln erfordern.

In diesem Zusammenhang ist es auch möglich, dass der Schieber dazu ausgebildet ist, in ein Schlüsselloch des Pfandschlosses eingeführt zu werden, um das Pfandschloss zu entriegeln.

Gemäß einem weiteren Aspekt der Erfindung wird ein Verfahren zum Herstellen einer erfindungsgemäßen Entriegelungs- und Haltevorrichtung bereitgestellt, wobei das Verfahren den Schritt des Herstellens eines oder mehrerer Komponenten der Entriegelungs- und Haltevorrichtung mittels additiver Fertigung, beispielsweise durch einen 3D-Drucker, umfasst. Additive Fertigungsverfahren haben sich in der Vergangenheit als zeit-, ressourcen- und kostensparend hervorgetan, sodass sich das erfindungsgemäße Verfahren zum Herstellen einer erfindungsgemäßen Entriegelungs- und Haltervorrichtung als besonders vorteilhaft erwiesen hat.

Die Erfindung wird nachfolgend anhand der Figuren näher erläutert. Hierbei zeigen:
- Fig. 1: ein Beispiel eines bekannten Pfandschlosses;
- Fig. 2: eine Ausführungsform der erfindungsgemäßen Entriegelungs- und Haltevorrichtung;
- Fig. 3:: eine Draufsicht der Entriegelungs- und Haltevorrichtung aus Fig. 2;
- Fig. 4:: eine Seitenansicht der Entriegelungs- und Haltevorrichtung aus Fig. 2;
- Fig. 5:: eine alternative Ausführungsform der erfindungsgemäßen Entriegelungs- und Haltevorrichtung;
- Fig. 6:: eine weitere Ausführungsform der erfindungsgemäßen Entriegelungs- und Haltevorrichtung; und
- Fig. 7:: die Entriegelungs- und Haltevorrichtung aus Fig. 2 mit einer zusätzlichen Blattfeder.

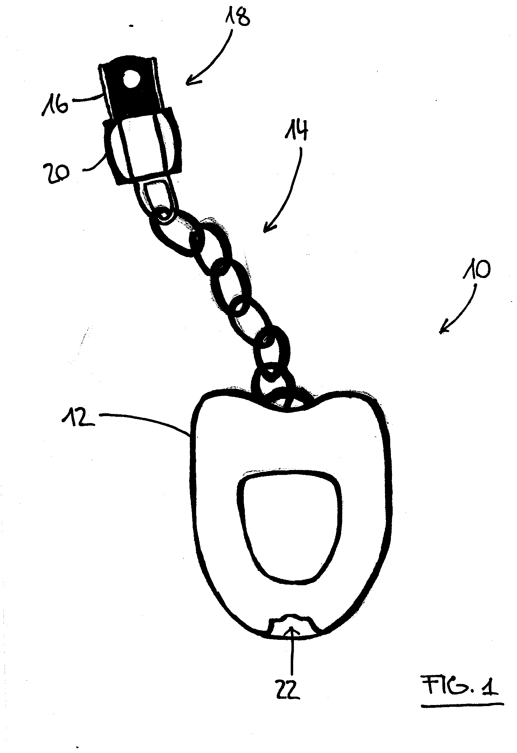

Fig. 1 zeigt ein Beispiel für ein bekanntes Pfandschloss 10, welches oft an Einkaufswäge fixiert ist, um diese einerseits vor Diebstahl zu schützen, und um andererseits Kunden dazu zu ermutigen, die Einkaufswägen nach Benutzung wieder an die dafür vorgesehenen Sammelstellen zurück zu bringen.

Bekannte Pfandschlösser 10 weisen ein an einem Einkaufswagen befestigbares Gehäuse 12 auf, in dem eine Kopplungseinrichtung mit integrierter Pfandrückhalteeinrichtung (nicht gezeigt) angeordnet ist. Am Gehäuse 12 ist außerdem ein flexibles Teil 14 befestigt, das einen mit einem metallischen Schaft 16 ausgestatteten Schlüssel 18 trägt. Der Schlüssel 18 besitzt zur besseren Handhabung gewöhnlich zudem einen aus Kunststoff 20 bestehenden Halteknauf.

Dieser Schlüssel 18 kann auf einer dem Benutzer abgewandten Seite des Gehäuses 12 eines weiteren Pfandschlosses in einen dafür vorgesehenen Schlitz (nicht dargestellt) eingeführt werden, um so zwei Pfandschlösser 10, und dementsprechend auch zwei Einkaufswägen, miteinander zu koppeln.

Zum Lösen dieser Kopplung weist das Pfandschloss 10 auf der dem Benutzer zugewandten Seite einen weiteren Schlitz 22 auf, in den ein Schieber 24, vorzugsweise in der Form einer Münze, eingeschoben werden kann, sodass der Schlüssel 18 vom Pfandschloss 10 ausgeworfen wird.

Die internen Mechaniken, die diese Funktion der Ver- und Entriegelung des Pfandschlosses 10 ermöglichen, sind hinreichend bekannt und werden daher hier nicht weiter behandelt.

Die Erfindung bezieht sich vielmehr auf eine Entriegelungs- und Haltevorrichtung 26, d. h. auf eine konkrete Ausgestaltung des Schiebers 24, welche erfindungsgemäß mehr als eine Funktion aufweist.

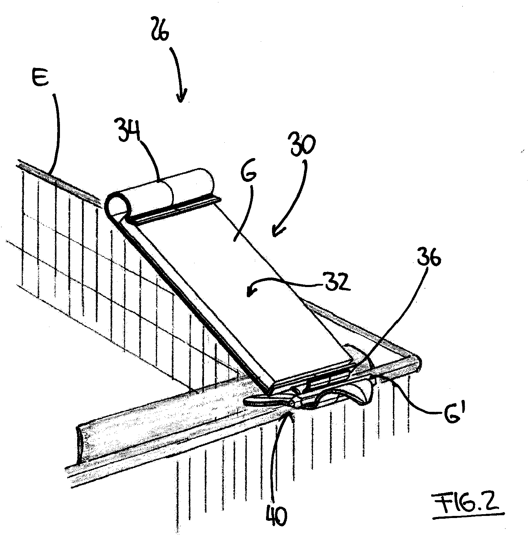

Eine Ausführungsform einer erfindungsgemäßen Entriegelungs- und Haltevorrichtung 26 ist in den Figuren 2 bis 4 dargestellt.

Fig. 2 zeigt hierbei eine bereits an einem Einkaufswagen E fixierte Entriegelungs- und Haltevorrichtung 26. Das an dem Einkaufswagen E fixierte Pfandschloss 10 ist aus Gründen der Übersichtlichkeit hier nicht explizit dargestellt. Es wird jedoch in diesem Zusammenhang erwähnt, dass das Pfandschloss 10 sich im Bereich der Entriegelungs- und Haltevorrichtung 26 befindet, meistens im Bereich eines Handlaufs des Einkaufswagen 10, sodass die Entriegelungs- und Haltevorrichtung 26 ein gesichertes Pfandschloss 10 entriegeln kann.

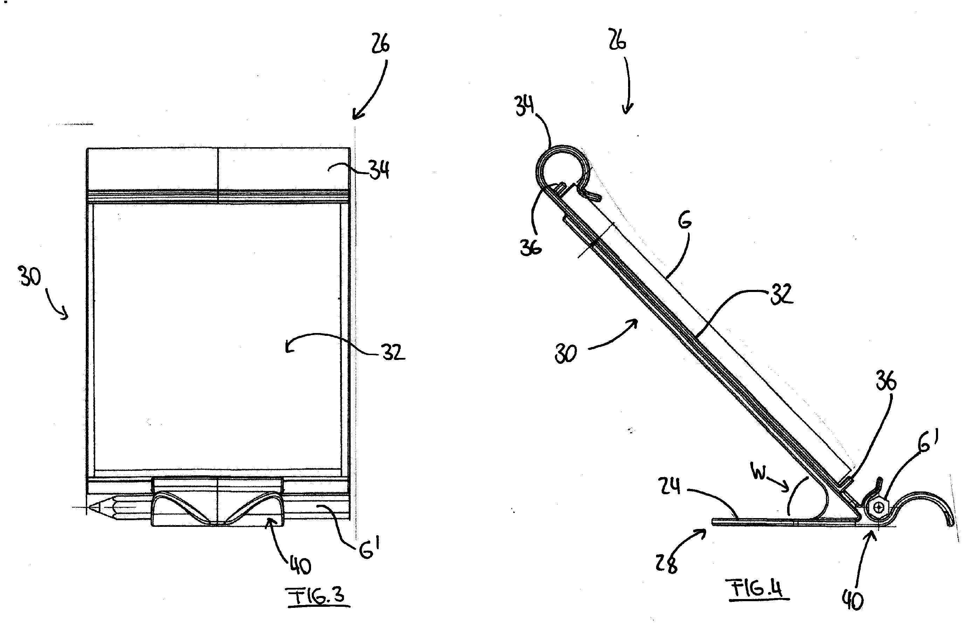

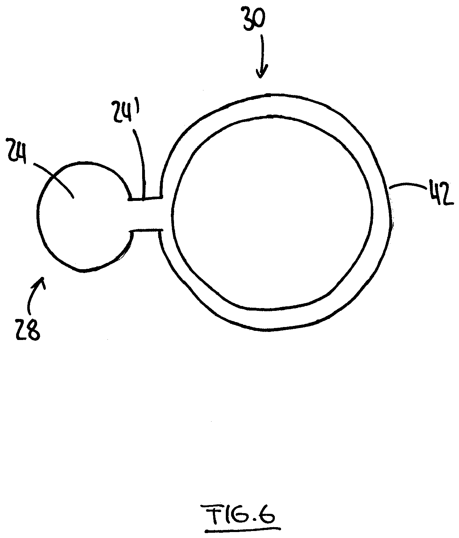

Hierfür weist die Entriegelungs- und Haltevorrichtung 26 einen Schieber 24 auf (siehe Fig. 4), welcher grundsätzlich jede beliebige Form aufweisen kann. Die meisten bekannten Pfandschlösser 10, werden durch Münzen oder münzenartige Chips entriegelt, sodass der Schieber 24 ebenfalls zumindest an seinem freien Ende 28 die Form einer Münze aufweisen kann (siehe Fig. 6). Dieses freie Ende 28 kann dann in den Schlitz 22 des Pfandschlosses 10 eingeführt werden, um dieses zu entriegeln.

Die erfindungsgemäße Entriegelungs- und Haltevorrichtung 26 weist des Weiteren ein Halteelement 30 mit einer Auflagefläche 32 auf. Die Auflagefläche 32 des Halteelements 30 ist derart ausgebildet, dass ein Gegenstand G, wie beispielsweise ein Einkaufszettel oder ein Smartphone oder ein anderer Gegenstand G darauf aufliegen kann, sodass der Gegenstand G von dem Halteelement 30 gehalten wird.

Zur Fixierung des Gegenstands weist die Entriegelungs- und Haltevorrichtung 26 bzw. das Halteelement 30 außerdem zumindest eine Klemmvorrichtung 34 auf, die derart ausgebildet ist, dass sie den an dem Halteelement 30 zu befestigenden Gegenstand G zumindest zeitweise fixeren, d. h. beispielsweise festklemmen, kann. Im in den Figuren 2 bis 4 gezeigten Ausführungsbeispiel kann beispielsweise ein Zettel oder auch ein Smartphone durch eine am oberen Ende des Halteelements 30 angeordnete Klemmvorrichtung 34 auf der Auflagefläche 32 festgeklemmt werden. Hierfür kann die Klemmvorrichtung 34 vom Benutzer angehoben und der Gegenstand G zwischen Klemmvorrichtung 34 und Auflagefläche 32 geschoben werden. Durch die Vorspannung der Klemmvorrichtung 34 wird somit der Gegenstand G auf einfache und dennoch sichere Weise an der Auflagefläche 32 festgeklemmt.

Zur weiteren Unterstützung der Klemmvorrichtung 34 kann außerdem an einem unteren Ende des Halteelements 30 eine Begrenzungskante 36 vorgesehen sein, an welcher der Gegenstand G anliegt.

In diesem Zusammenhang ist zu erwähnen, dass sie die Bezeichnungen für "oben" und "unten" hier auf die Ausrichtung der Entriegelungs- und Haltevorrichtung 26 in den Figuren bezieht.

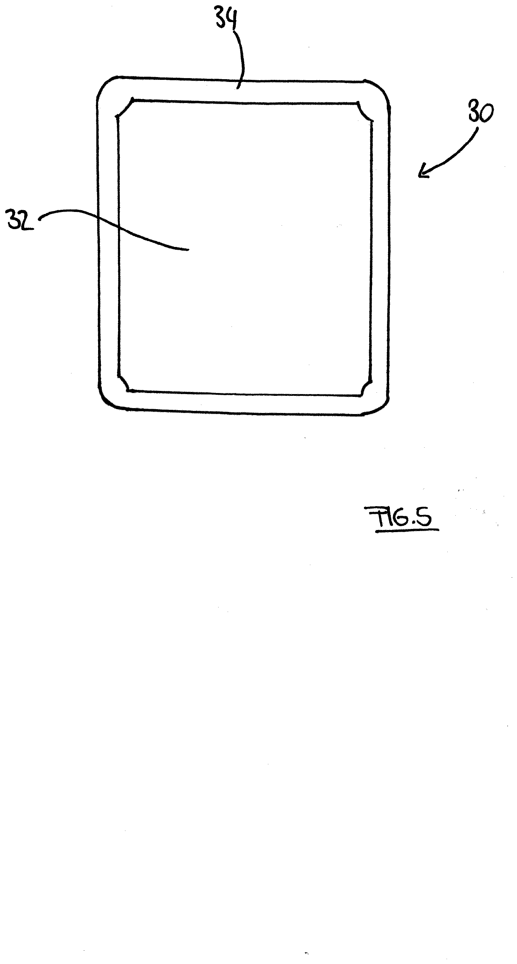

Sowohl die Klemmvorrichtung 34 als auch die Begrenzungskante 36 können in anderen Ausführungsbeispielen an anderen Positionen an dem Halteelement 30 angeordnet sein. In manchen Ausführungsbeispielen können Klemmvorrichtung 34 und Begrenzungskante 36 außerdem integral ausgebildet sein. Eine derartige Ausführungsform kann beispielsweise als Klemmvorrichtung 34 sowie als Begrenzungskante 36 eine um das Halteelement 30 durchgehend umlaufende, elastische Umrandung, bspw. im Stil einer Handyhülle, aufweisen, die den Gegenstand G an der Auflagefläche hält (siehe Fig. 5).

Die Klemmvorrichtung 34 sowie die Begrenzungskante 36 können also entsprechend der Anwendung bzw. auch entsprechend des Gegenstands ausgebildet und angepasst sein. Im Ausführungsbeispiel gemäß der Figuren 2 bis 4 und 7 sind beispielsweise zwei Begrenzungskanten 36 vorgesehen, wobei eine am unteren und eine am oberen Ende des Halteelements 30 angeordnet ist.

Des Weiteren kann die Entriegelungs- und Haltevorrichtung 26 eine weitere Befestigungseinrichtung (nicht dargestellt) aufweisen, die unterstützend zur Klemmvorrichtung 34 und/oder zur Begrenzungskante 36 wirkt. Beispiele für eine zusätzliche Befestigungseinrichtung können unter anderem elastische Schlaufen und/oder Gummibänder sein, welche über das Halteelement 30 gespannt werden, um den Gegenstand G zusätzlich zu fixieren. In einer alternativen Ausführungsform kann die zusätzliche Befestigungseinrichtung auch ähnlich oder gleich wie die Klemmvorrichtung 34 ausgebildet und lediglich an einer anderen Stelle an dem Halteelement 30 angeordnet sein, sodass die zusätzliche Befestigungseinrichtung gleich auf den Gegenstand G wirkt wie die Klemmvorrichtung 34.

Ob und welche Befestigungseinrichtung gewählt wird, kann je nach Anwendung und/oder Gegenstand G frei gewählt werden.

Die Ausführungsform gemäß der Figuren 2 bis 4 weist außerdem eine weitere Fixiereinrichtung 40 auf, welche dazu ausgebildet ist, einen weiteren Gegenstand G', beispielsweise einen Stift, zumindest zeitweise zu halten. In der gezeigten Ausführungsform ist auch die Fixiereinrichtung 40 als Klemmeinrichtung 40 ausgebildet, die den Gegenstand 40' festklemmen kann. Außerdem ist die Fixiereinrichtung 40 am unteren Ende des Halteelements 30, direkt unterhalb der Begrenzungskante 36 angeordnet.

Grundsätzlich ist auch möglich, die Fixiereinrichtung 40 an anderen Stellen am Halteelement 40, beispielsweise an einer seitlichen Kante des Halteelements 40, anzuordnen. Außerdem kann die Fixiereinrichtung 40 den weiteren Gegenstand G' auch auf andere Weisen fixieren. Es kann beispielsweise auch vorgesehen sein, dass die Fixiereinrichtung 40 als Ring oder Zylinder ausgebildet ist, sodass der Gegenstand darin eingeführt werden kann, um von der Fixiereinrichtung 40 gehalten zu werden.

Insbesondere in den Figuren 2 und 4 kann man außerdem erkennen, dass der Schieber 24 und das Halteelement 30 in einem Winkel W zueinander angeordnet sind, der kleiner als 90° ist. Hierdurch kann garantiert werden, dass der Gegenstand G, der sich auf der Auflagenfläche 32 befindet, in Richtung des Benutzers zeigt, wenn der Schieber 24 in den Schlitz 22 des Pfandschlosses 10 eingeführt ist.

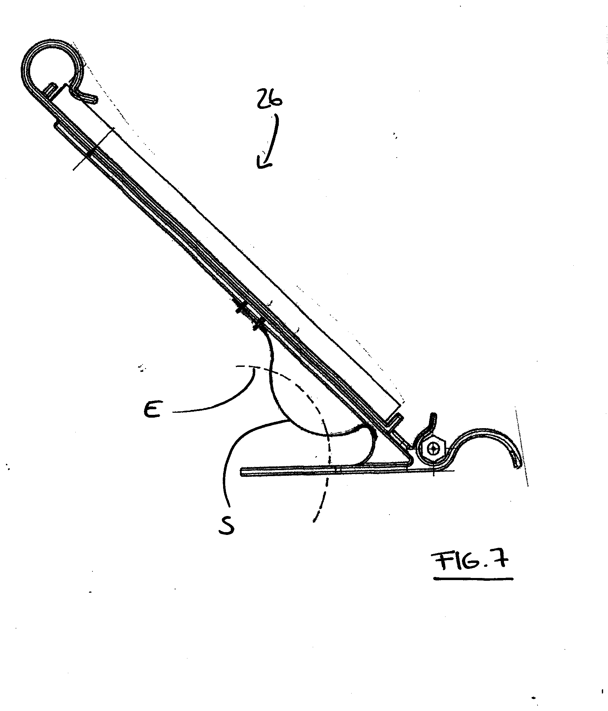

Der Winkel W kann grundsätzlich jeden beliebigen Wert aufweisen, wie in Fig. 6 zu erkennen ist. Hier kann man deutlich erkennen, dass der Winkel W abhängig von der Ausgestaltung des Halteelements 30 ist. Fig. 7 zeigt eine weitere Ausführungsform der erfindungsgemäßen Entriegelungs- und Haltevorrichtung 26, welche größtenteils mit der Ausführungsform gemäß der Figuren 2 bis 4 übereinstimmt. Zusätzlich zu den bereits oben beschriebenen Eigenschaften weist die Entriegelungs- und Haltevorrichtung 26 aus Fig. 7 allerdings auch noch eine Stabilisierungsvorrichtung S in Form zweier Blattfedern auf, welche dazu ausgebildet ist, das Halteelement 30 am Einkaufswagen E (als gestrichelte Linie angedeutet) zusätzlich zu stabilisieren.

In weiteren Ausführungsformen können auch weitere Stabilisierungsvorrichtungen S vorgesehen sein und/oder anders ausgebildete Stabilisierungsvorrichtungen S vorgesehen sein.

Fig. 6 zeigt nämlich eine Ausführungsform der Entriegelungs- und Haltevorrichtung 26, bei der das Halteelement 30 in Form eines Rings 42 ausgestaltet ist, sodass der Ring 42 die Funktion eines Becher- bzw. Flaschenhalters übernimmt. Das in Fig. 6 dargestellte Ausführungsbeispiel umfasst demnach ein Halteelement 30 welches über einen Verbindungsabschnitt 24' integral mit dem Schieber 24 ausgebildet ist, der die Form einer Münze aufweist. Schieber 24 und Halteelement 30 sind somit derart zueinander angeordnet, dass ein in dem Ring 42 gehaltener Gegenstand G horizontal ausgerichtet ist, wenn der Schieber 24 in dem Schlitz 22 des Pfandschlosses 10 eingeführt ist. Demnach beträgt der Winkel W zwischen Schieber 24 und Halteelement 30 in diesem Ausführungsbeispiel im Wesentlichen 180°.

Grundsätzlich ist es bei diesem Ausführungsbeispiel auch denkbar, dass das Halteelement 30 eine Klemmvorrichtung 34 und/oder eine Fixiereinrichtung 40 aufweist, um einen zusätzlichen Gegenstand G', beispielsweise einen Stift und/oder einen Zettel, an der Entriegelungs- und Haltevorrichtung 26 befestigen zu können.

Fig. 5 zeigt eine Ausführungsform eines Halteelements 30, bei der das Halteelement 30 eine Auflagefläche 32 sowie eine umlaufende Klemmvorrichtung 34 bzw. eine umlaufende Begrenzungskante 36 aufweist. Die Klemmvorrichtung 34 und die Begrenzungskante 36 sind hier also integral ausgebildet sodass sie die gesamte Auflagefläche 32 umranden. Die Klemmvorrichtung 34 kann in diesem Fall beispielsweise aus einem flexiblen Kunststoff derart gebildet sein, dass ein Gegenstand G, wenn er auf der Auflagefläche 32 aufliegt, von der Klemmvorrichtung 34 eingeschlossen wird und nach Benutzung der Entriegelungs- und Haltevorrichtung 26 auch leicht wieder von dem Halteelement 30 entfernt werden kann.

Der Schieber 24 im Ausführungsbeispiel von Fig. 5 ähnlich wie in Figur 2 zum Halteelement 30 angeordnet sein, sodass der an dem Halteelement 30 fixierte Gegenstand G in Richtung des Benutzers zeigt, wenn die Entriegelungs- und Haltevorrichtung 26 an dem Pfandschloss 10 fixiert ist.

Grundsätzlich können bei allen Ausführungsbeispielen Schieber 24 und Halteelement 30 integral ausgebildet sein. Dies hat vor allem den Vorteil, dass Entriegelungs- und Haltevorrichtung 26 aus weniger Einzelkomponenten geformt werden kann, was sowohl eine Kosten- als auch eine Zeitersparnis in der Fertigung zur Folge haben kann. In diesem Zusammenhang ist es auch denkbar, dass die gesamte Entriegelungs- und Haltevorrichtung 26 einteilig ausgebildet ist.

Es ist allerdings auch möglich, dass Entriegelungs- und Haltevorrichtung 26 mehrteilig ausgestaltet ist. Insbesondere kann es bei allen Ausführungsformen auch möglich sein, dass der Schieber 24 verschiebbar bzw. verschwenkbar zum Haltelement 30 angeordnet ist.

Dies kann zum Vorteil haben, dass der Schieber 24 nach Benutzung wieder eingeschwenkt oder eingefahren werden kann, um die Entriegelungs- und Haltevorrichtung 26 besser verstauen zu können.

Außerdem kann es auch vorgesehen sein, dass der Schieber 24 lösbar an der Entriegelungs- und Haltevorrichtung 26 und insbesondere an dem Halteelement 30 fixiert ist, sodass jede Komponente auch unabhängig voneinander benutzt werden kann und nur in bestimmten Situationen miteinander zum Einsatz kommen.

Durch die erfindungsgemäße Entriegelungs- und Haltevorrichtung 26 können also zwei Funktionen in einer Vorrichtung realisiert werden. Einerseits kann durch den Schieber 24 ein Pfandschloss 10 eines Einkaufswagens E entriegelt werden und andererseits kann durch das an dem Schieber 24 fixierte Halteelement 26 ein oder mehrere Gegenstände G, G' daran fixiert werden, sodass der Benutzer während des Einkaufs beide Hände frei hat, um den Einkaufswagen E zu schieben bzw. seine Einkäufe zu holen.

## Patentansprüche

1. Entriegelungs- und Haltevorrichtung zum Entriegeln von Einkaufswägen (E) und Halten von Gegenständen (G), wobei die Entriegelungs- und Haltevorrichtung (26) einen Schieber (24) aufweist, um ein Pfandschloss (10) zu entriegeln, und wobei die Entriegelungs- und Haltevorrichtung (26) ferner derart ausgebildet ist, dass diese einen Gegenstand (G) zumindest zweitweise an einem Haltelement (30) der Entriegelungs- und Haltevorrichtung (26) befestigen und/oder halten kann.

2. Entriegelungs- und Haltevorrichtung nach Anspruch 1,
wobei das Halteelement (30) einteilig mit der Entriegelungs- und Haltevorrichtung (26) ausgebildet ist.

3. Entriegelungs- und Haltevorrichtung nach Anspruch 1,
wobei das Haltelement (30) mehrteilig mit der Entriegelungs- und Haltevorrichtung (26) ausgebildet ist.

4. Entriegelungs- und Haltevorrichtung nach Anspruch 1 oder 3,
wobei das Halteelement (30), insbesondere lösbar, an der Entriegelungs- und Haltevorrichtung (26) fixiert ist.

5. Entriegelungs- und Haltevorrichtung nach einem der vorstehenden Ansprüche 1 und 3 bis 4,
wobei der Schieber (24) gegenüber dem Haltelement (30) der Entriegelungs- und Haltevorrichtung (26) schwenkbar angeordnet ist.

6. Entriegelungs- und Haltevorrichtung nach einem der vorstehenden Ansprüche 1 und 3 bis 5,
wobei der Schieber (24) gegenüber dem Haltelement (30) der Entriegelungs- und Haltevorrichtung (26) verschiebbar angeordnet ist.

7. Entriegelungs- und Haltevorrichtung nach einem der vorstehenden Ansprüche,
wobei das Halteelement (30) eine Auflagefläche (32) aufweist, auf der der Gegenstand (G) aufliegt, wenn er befestigt und/oder gehalten wird.

8. Entriegelungs- und Haltevorrichtung nach einem der vorstehenden Ansprüche,
wobei das Halteelement (30) zumindest eine Klemmvorrichtung (34) aufweist, um den Gegenstand (G), insbesondere an der Auflagefläche (32), zu fixieren.

9. Entriegelungs- und Haltevorrichtung nach einem der vorstehenden Ansprüche,
wobei das Halteelement (30) zumindest eine weitere Befestigungseinrichtung aufweist, die den Gegenstand (G) zusätzlich fixieren kann und/oder die einen weiteren Gegenstand (G) an dem Halteelement (30) befestigen kann.

10. Entriegelungs- und Haltevorrichtung nach einem der Ansprüche 8 bis 9, wobei das Halteelement (30) zumindest eine Begrenzungskante (36) aufweist, die an einer der Klemmvorrichtung (34) und/oder der weiteren Befestigungseinrichtung gegenüberliegenden Seite des Halteelements (30) angeordnet ist, sodass der Gegenstand (G) an der Begrenzungskante (36) anliegen kann, insbesondere wenn er von der Klemmvorrichtung (34) und/oder der weiteren Befestigungseinrichtung gehalten wird.

11. Entriegelungs- und Haltevorrichtung nach Anspruch 10,
wobei die Begrenzungskante (36) in der Befestigungseinrichtung integriert ist.

12. Entriegelungs- und Haltevorrichtung nach einem der vorstehenden Ansprüche,
wobei zumindest eine weitere Fixiervorrichtung (40) vorgesehen ist, die dazu ausgebildet ist, einen weiteren Gegenstand (G'), insbesondere einen Stift, zu fixieren und/oder zu halten.

13. Entriegelungs- und Haltevorrichtung nach einem der vorstehenden Ansprüche,
wobei der Schieber (24) an einem unteren Ende des Halteelements (30) angeordnet ist, und/oder
wobei der Schieber (24) und das Halteelement (30) in einem Winkel (W) zueinander angeordnet sind, der zwischen 0° und 90° liegt, wobei der Winkel (W) vom Benutzer ggf. einstellbar ist.

14. Entriegelungs- und Haltevorrichtung nach einem der vorstehenden Ansprüche,
wobei der Schieber (24) an seinem freien Ende (28) teilweise im Wesentlichen die Form einer Münze aufweist, die über einen Verbindungsabschnitt (24') mit dem Halteelement (30) verbunden oder verbindbar ist.

15. Entriegelungs- und Haltevorrichtung nach einem der vorstehenden Ansprüche,
wobei der Schieber (24) dazu ausgebildet ist, in ein Schlüsselloch (22) des Pfandschlosses (10) eingeführt zu werden, um das Pfandschloss (10) zu entriegeln.

16. Verfahren zum Herstellen einer Entriegelungs- und Haltevorrichtung nach einem der vorstehenden Ansprüche,
umfassend den Schritt Herstellen eines oder mehrerer Komponenten der Entriegelungs- und Haltevorrichtung (26) mittels additiver Fertigung, beispielsweise durch einen 3D-Drucker.
